# EUROPEAN PATENT APPLICATION

(11) **EP 1 953 034 A2**
(43) Date of publication of application: **06.08.2008**
(21) Application number: 08150064.7
(22) Date of filing: 07.01.2008
(51) Int. Cl.: B60N 2/28

(54) **Child seat**

(30) Priority: 31.01.2007 JP 2007021517
(71) Applicant: TAKATA CORPORATION, Tokyo 106-8510 (JP)
(72) Inventor: Sakumoto, Masayuki, Tokyo Tokyo 106-8510 (JP)
(74) Representative: Vossius & Partner

(57) **Abstract**

A child seat is provided which includes a laterally extendable bottom block on the bottom surface of a child seat main body. To install a child seat 1 on a vehicle seat such that a child to be placed therein faces the rear end of a vehicle, a bottom block 20 is positioned near the front end of a seat portion 11. This causes the bottom block 20 to project from the bottom surface of the seat portion 11. Accordingly, the child seat 1 is positioned with a back portion 12 largely reclined, i.e., in a bed state, whereby a baby can be held in the child seat 1 in a substantially supine position. When the extendable members 40 come out of the recess 13 while the bottom block 20 is being moved forward, extendable members 40 (40L, 40R) spontaneously project laterally outward because of the pressing force of springs 37 (Fig. 1).

## Description

The present invention relates to a child seat which is to be installed on a vehicle seat and in which a child sits, and more specifically, it relates to a child seat having a function facilitating changing of the installation angle when installed on the vehicle seat.

When a baby who cannot hold his/her head up is placed in a child seat, the child seat is usually installed facing backward. In contrast, when an infant who can hold his/her head up is placed in a child seat, the child seat is often installed facing forward. When a baby is placed in a child seat facing backward, the backrest (back portion) of the child seat desirably has a gentle slope. On the other hand, when an infant is placed in a child seat facing forward, the backrest desirably stands at a relatively vertical angle.

JP-A-11-291799 (Patent Document 1) discloses a child seat including a child seat main body having a rotating plate rotatably disposed on the bottom thereof so as to enable the child seat to face forward or backward. The rotating plate is adjusted between forward and backward positions. This enables the child seat to be installed backward for accommodating a baby at a large reclining angle (to be lowered nearly flat), or forward for accommodating an infant at a small reclining angle (to be raised nearly upright), thereby achieving angles suitable for both a baby and an infant.

In light of the situation described above, the present invention aims to provide a child seat that can be installed on a vehicle seat in a more stable manner by providing at the bottom of a child seat main body a bottom block whose lateral length can be increased.

A child seat of the present invention (Claim 1) is to be installed on a vehicle seat and includes a child seat main body, and a bottom block for adjusting an installation angle of the child seat. The bottom block is attached on a bottom surface of the child seat main body so as to be adjustable in terms of anteroposterior position. The bottom block is laterally extendable.

In the child seat of the present invention (Claim 2) according to Claim 1, the bottom block attached to the child seat main body so as to be adjustable in terms of anteroposterior position is movable between a first position where the bottom block underlies a region near a front end of the bottom surface of the child seat main body and a second position where the bottom block underlies a region near a rear end of the bottom surface of the child seat main body. Further, the bottom block has an extended lateral length when placed in the first position.

In the child seat of the present invention (Claim 3) according to Claim 2, the child seat main body has a recess in at least the region near the rear end of the bottom surface thereof. Further, the bottom block is housed in the recess without projecting therefrom when placed in the second position. Further, the bottom block projects downward at the region near the front end of the bottom surface of the child seat main body when placed in the first position.

In the child seat of the present invention (Claim 4) according to Claim 3, the bottom block includes a bottom block main body, an extendable member projectable from the bottom block main body in a direction in which a lateral length of the bottom block increases, and a resilient member that urges the extendable member in a direction in which the extendable member projects. Further, the extendable member projects in the direction in which the lateral length of the bottom block increases because of an urging force applied by the resilient member when the extendable member comes out of the recess.

In the child seat according to the present invention, the bottom block attached on the bottom surface of the child seat main body is laterally extendable. When the lateral length of the bottom block is increased, the child seat can be installed in a stabilized manner. When the lateral length of the bottom block is not increased, the size of the child seat can be kept small.

As disclosed in Claim 2, the bottom block is configured to have an extended lateral length when placed in the first position. Therefore, the child seat can be stabilized when installed to face backward.

As disclosed in Claim 3, the child seat is configured such that the bottom block is housed in the recess, which is provided in a region near the rear end of the bottom surface of the child seat main body, without projecting therefrom. Therefore, the child seat can be installed in a stabilized manner on a vehicle seat without being hampered by the bottom block. Further, when the bottom block is housed in the recess, the size of the child seat can be kept small.

As disclosed in Claim 4, the child seat is configured such that the extendable member projects to increase the lateral length of the bottom block when the bottom block comes out of the recess. This eliminates the need for a manual operation of increasing the lateral length of the bottom block, for example, drawing out the extendable member. The lateral length of the bottom block spontaneously increases when the bottom block is merely moved out of the recess, whereby convenience is improved.

An embodiment of the present invention will now be described with reference to the drawings.
Fig. 1 is a rear perspective view of a child seat according to an embodiment, with a bottom block positioned forward;
Fig. 2 is a rear perspective view of the child seat according to the embodiment, with the bottom block positioned backward;
Fig. 3 is a side view of the child seat in Fig. 1 installed to face the rear end of a vehicle on a vehicle seat;
Fig. 4 is a side view of the child seat in Fig. 2 installed to face the front end of the vehicle on the vehicle seat;
Fig. 5 is a perspective view of the bottom block; and
Fig. 6 is a perspective view of the bottom block with extendable members projecting therefrom.

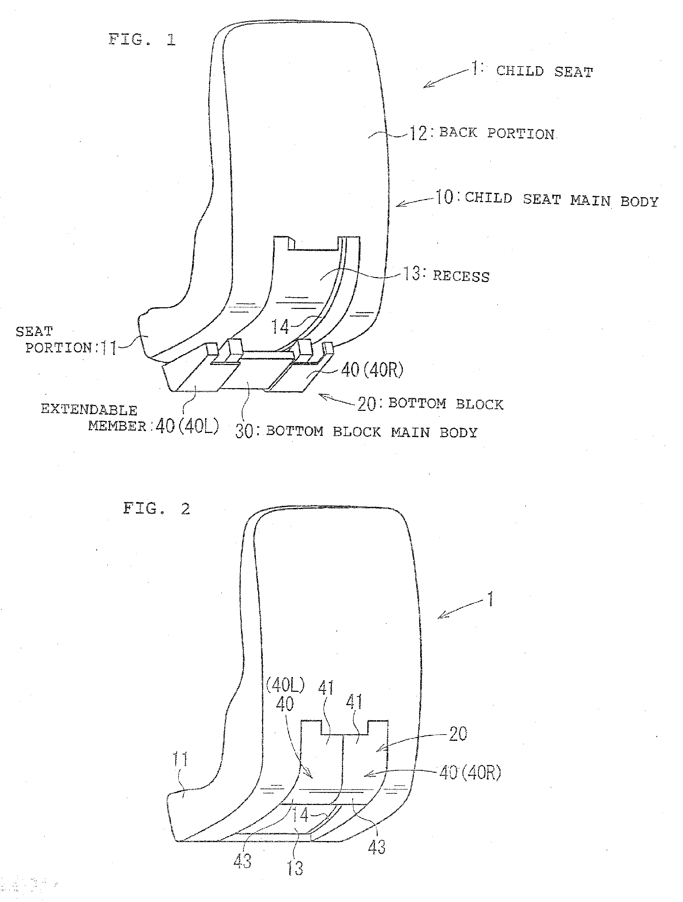

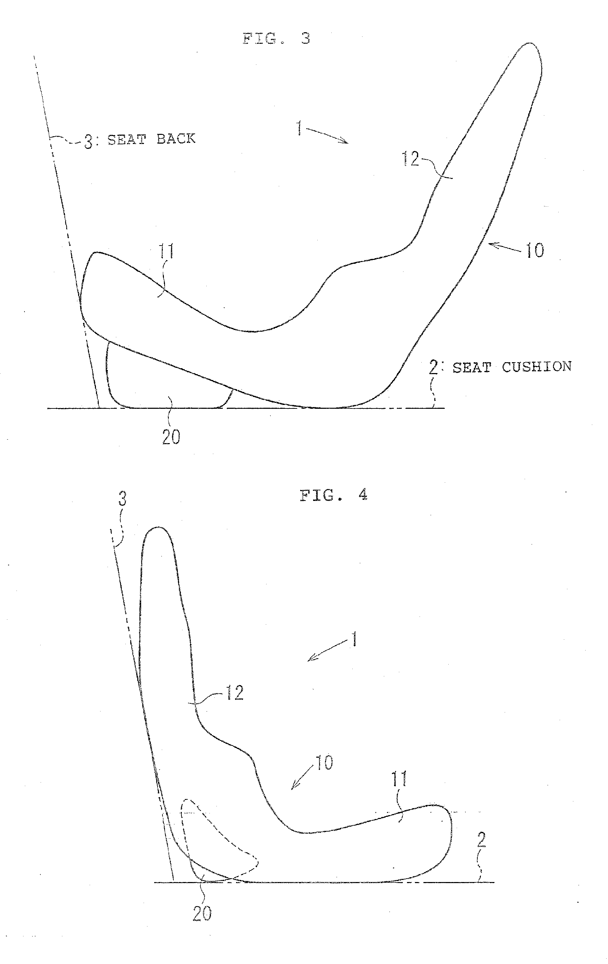

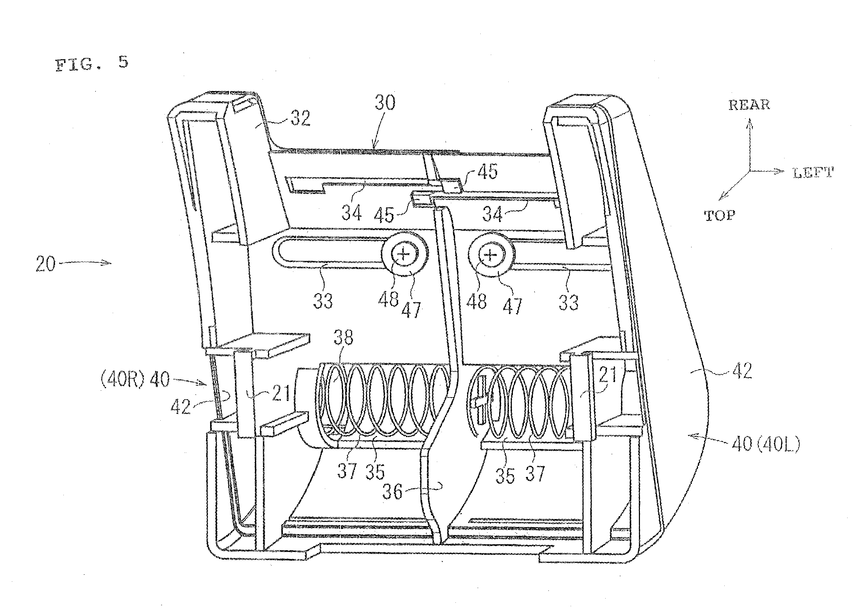

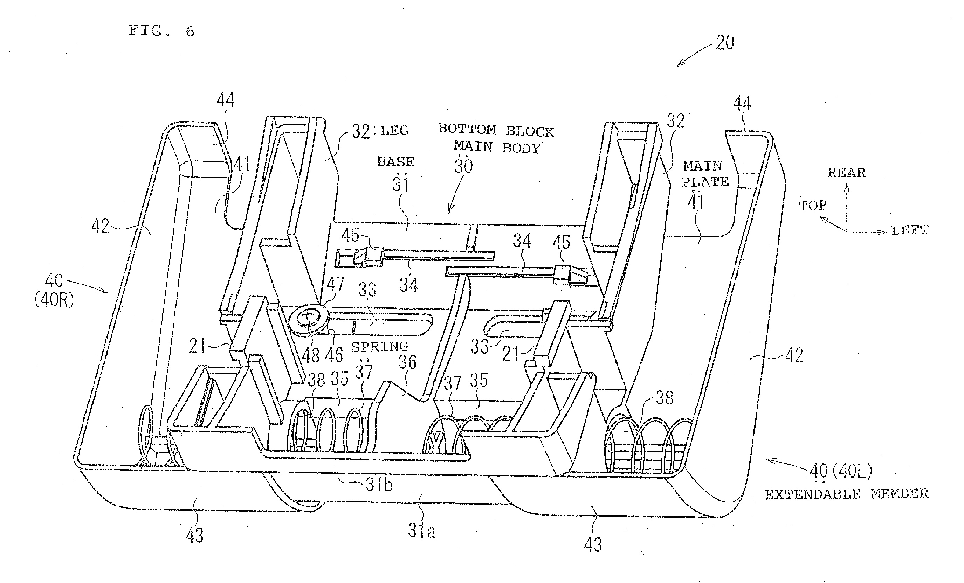

Figs. 1 and 2 are perspective views of a child seat according to an embodiment of the present invention when seen from the lower back thereof. A bottom block is positioned at the front end of the child seat in Fig. 1 and at the rear end of the child seat in Fig. 2. Fig. 3 is a side view of the child seat installed to face backward on a vehicle seat. Fig. 4 is a side view of the child seat installed to face forward on a vehicle seat. Figs. 5 and 6 are perspective views of the bottom block, which is not widened laterally in Fig. 5 and widened laterally with extendable members projecting therefrom in Fig. 6. In the following description, directional expressions such as the front/rear/left/right of the child seat refer to those directions when seen from a child sitting in the child seat.

A child seat 1 is installed on a seat cushion 2 (Figs. 3 and 4) of a vehicle seat and is secured to the vehicle seat with a seatbelt (not illustrated) of the vehicle seat. A reference numeral 3 denotes a seat back.

The child seat 1 includes a child seat main body 10 and a bottom block 20 attached on the bottom surface of the child seat main body 10.

The child seat main body 10 of the child seat 1 may be either a body in which a child directly sits or a body in which a chair-like body (not illustrated) called a shell is reclinably installed on the child seat main body 10 for accommodating a child therein.

The child seat main body 10 includes a seat portion 11 arranged to be placed on the seat cushion 2 in an overlying manner, and a back portion 12 standing upright from the rear end of the seat portion 11, thereby formed to be substantially L-shaped in longitudinal sectional view. A recess 13 extends from the bottom surface of the seat portion 11 to the lower back surface of the back portion 12 for engagement with the bottom block 20. The recess 13 includes guide grooves 14 provided along both right and left ends thereof for slidable engagement with L-shaped latches 21 (Figs. 5 and 6) included in the bottom block 20. This enables attachment of the bottom block 20 to the child seat main body 10 in such a manner that the bottom block 20 can freely slide back and forth.

The depth of the recess 13 becomes smaller toward the front end of the seat portion 11, and is larger than or equal to the thickness of the bottom block 20 at the distal end of the recess 13.

As shown in Figs. 5 and 6, the bottom block 20 includes a bottom block main body 30, a pair of extendable members 40 engaging with the bottom block main body 30 for lateral sliding, springs 37 as resilient elements that urge the extendable members 40 in a lateral direction in which the child seat is extended, and the like.

The extendable members 40 include a left extendable member 40 (40L) and a right extendable member 40 (40R) disposed on the left and the right, respectively, of the bottom block main body 30.

The bottom block main body 30 includes a plate-like base 31 arranged to face the seat portion 11, and legs 32 projecting upward from right and left ends of the base 31 and extending anteroposteriorly. The legs 32 are provided with the latches 21 projecting from top-end portions thereof. The latches 21 have portions projecting outward to the right and left, respectively, for engagement with the guide grooves 14. The latches 21 also extend anteroposteriorly with a predetermined length, whereby the bottom block 20 can be moved smoothly back and forth along the guide grooves 14.

The base 31 includes primary elongated holes 33 and secondary elongated holes 34 all extending laterally. The primary elongated holes 33 and the secondary elongated holes 34 are provided in pairs, respectively, on the right and the left.

The base 31 includes a spring-receiving flute 35 extending laterally. The spring-receiving flute 35 is sectioned by a partition 36 disposed at the longitudinal center thereof. The spring-receiving flute 35 receives the springs 37, or coil springs, in the respective sectioned compartments 35 on the right and the left of the partition 36 in an urged state.

The legs 32 are provided with tunnel-like holes 38 communicating with the spring-receiving flute 35. The springs 37 pass through the holes 38 and have contact with side walls 42 of the extendable members 40 so as to press the respective extendable members 40 laterally outward, i.e., in opposite directions.

The base 31 has an upright wall 31a extending upward at the front edge thereof. The upright wall 31a has a step 31b, with which the upper edges of front walls 43 of the extendable members 40 are in contact.

The extendable members 40 include main plates 41 slidably underlying the base 31, the side walls 42 standing upright at the right and left edges, respectively, of the main plates 41 and facing the outer surfaces of the legs 32, the front walls 43 standing upright at the front edges of the main plates 41, and rear walls 44 standing upright at the rear edges of the main plates 41. The left extendable member 40L has the side wall 42 at the left edge thereof, and the right extendable member 40R has the side wall 42 at the right edge thereof.

The main plate 41 has a hook 45 projecting upward therefrom and slidably engaging with the secondary elongated hole 34. The main plate 41 also has a boss 46 projecting upward therefrom and slidably fitted into the primary elongated hole 33. Atop the boss 46 is provided a washer 47 secured with a screw 48. The washer 47 slidably straddles the primary elongated hole 33 from above.

The bottom block 20 has a trapezoidal or substantially triangular shape in side view, whose thickness becomes the smallest at its rear end and gradually becomes larger toward its front end.

The side walls 42, front walls 43, and rear walls 44 of the extendable members 40 have heights smaller than that of the legs 32. That is, the top edges of the side walls 42, front walls 43, and rear walls 44 are positioned at levels lower than that of the top edges of the legs 32.

When the bottom block 20 is positioned at the front end of the recess 13, the main plate 41, the side walls 42, the front walls 43, and the rear walls 44 are all positioned below the bottom surface of the seat portion 11.

In such a position, the left extendable member 40L and the right extendable member 40R project leftward and rightward, respectively, because of the pressing force of the springs 37, as shown in Fig. 6. In Fig. 6, the bosses 46 are positioned at the leftmost and rightmost ends, respectively, of the primary elongated holes 33.

To install the child seat 1 configured as above on a vehicle seat such that a child to be placed therein faces the rear end of the vehicle, the bottom block 20 is positioned at the front end of the seat portion 11, as shown in Fig. 3.

This causes the bottom block 20 to project below the seat portion 11. Accordingly, the child seat 1 is positioned with the back portion 12 largely reclined, i.e., in a bed state, whereby a baby can be held in the child seat 1 in a substantially supine position.

Further, when the extendable members 40 come out of the recess 13 while the bottom block 20 is being moved forward, the extendable members 40 (40L and 40R) spontaneously project laterally outward, as shown in Fig. 6, because of the pressing force of the springs 37. Thus, the lateral length of the bottom block 20 becomes larger. This makes the child seat 1 less tiltable in the lateral direction of the seat cushion 2 and therefore stabilized for installation.

Positioning the bottom block 20 forward causes the extendable members 40 to spontaneously project leftward and rightward, respectively, with the aid of the pressing force of the springs 37. This eliminates the need for drawing out the extendable members 40 leftward and rightward, respectively, thereby improving convenience.

To install the child seat 1 on a vehicle seat such that a child to be placed therein faces the front end of the vehicle, the extendable members 40L and 40R are pushed inward to come closer to each other so that the side walls 42 are brought into contact with the legs 32 of the bottom block main body 30, as shown in Fig. 5, and the bottom block 20 is slid backward to be positioned at the distal end of the recess 13, as shown in Fig. 4.

In this state, the entirety of the bottom block 20 is housed within the recess 13. This causes the extendable members 40 not to project both below the rear bottom of the seat portion 11 and from the lower back of the back portion 12.

Accordingly, the bottom surface of the seat portion 11 can have contact with the seat cushion 2 in an overlying manner, while the back portion 12 can have contact with the seat back 3 in an overlying manner. Thus, the child seat 1 can be stabilized.

When the child seat 1 is installed as shown in Fig. 4, the back portion 12 is positioned relatively upright. This is suitable for an infant who can hold his/her head up to be placed therein.

Although the recess 13 extends to the front end of the seat portion 11 in the embodiment, the recess 13 may also be not provided at a region near the front end of the seat portion 11 while the entirety of the bottom block 20 including the bottom block main body 30 may also project downward from the bottom surface of the seat portion 11.

## Claims

1. A child seat to be installed on a vehicle seat, comprising:
a child seat main body; and
a bottom block for adjusting an installation angle of the child seat, the bottom block being attached on a bottom surface of the child seat main body so as to be adjustable in terms of anteroposterior position,
wherein the bottom block is laterally extendable.

2. The child seat according to Claim 1,
wherein the bottom block attached to the child seat main body so as to be adjustable in terms of anteroposterior position is movable between a first position where the bottom block underlies a region near a front end of the bottom surface of the child seat main body and a second position where the bottom block underlies a region near a rear end of the bottom surface of the child seat main body, and
wherein the bottom block has an extended lateral length when placed in the first position.

3. The child seat according to Claim 2,
wherein the child seat main body has a recess in at least the region near the rear end of the bottom surface thereof,
wherein the bottom block is housed in the recess without projecting therefrom when placed in the second position, and
wherein the bottom block projects downward at the region near the front end of the bottom surface of the child seat main body when placed in the first position.

4. The child seat according to Claim 3,
wherein the bottom block includes a bottom block main body, an extendable member projectable from the bottom block main body in a direction in which a lateral length of the bottom block increases, and a resilient member that urges the extendable member in a direction in which the extendable member projects, and
wherein the extendable member projects in the direction in which the lateral length of the bottom block increases because of an urging force applied by the resilient member when the extendable member comes out of the recess.
